Europäisches Patentamt

European Patent Office

Office européen des brevets

(19)

(11) Veröffentlichungsnummer: **0 172 469**

A2

(12) # EUROPÄISCHE PATENTANMELDUNG

(21) Anmeldenummer: **85109674.3**

(22) Anmeldetag: **01.08.85**

(51) Int. Cl.⁴: **B 61 D 27/00**
**B 60 H 1/24**

(30) Priorität: **23.08.84 DE 3430970**

(43) Veröffentlichungstag der Anmeldung:
**26.02.86** Patentblatt **86/9**

(84) Benannte Vertragsstaaten:
**AT CH DE FR LI**

(71) Anmelder: **Waggon Union GmbH**

**D-5900 Siegen(DE)**

(72) Erfinder: **Reemtsema, Karl-Dieter, Dipl.-Ing.**
**Blumenstrasse 7**
**D-4950 Minden/Westf.(DE)**

(72) Erfinder: **Wackermann, Peter**
**Am Lehmstich 11a**
**D-3050 Wunstorf 1(DE)**

(72) Erfinder: **Schneider, Felix**
**In der Hanfwiese 2**
**D-5902 Netphen 2(DE)**

(72) Erfinder: **Wagener, Paul-Werner**
**An der Netphe 39**
**D-5902 Netphen 1(DE)**

(74) Vertreter: **Eberhard, Friedrich, Dr.**
**Am Thyssenhaus 1**
**D-4300 Essen(DE)**

(54) **Lüftungseinrichtung für den Laderaum von geschlossenen Eisenbahngüterwagen.**

(57) Die Erfindung betrifft eine Lüftungseinrichtung für den Laderaum von geschlossenen Eisenbahngüterwagen mit im wesentlichen aus Schiebewandteilen bestehenden Seitenwänden. Bei dieser Art Güterwagen können die üblicherweise in den Seitenwänden angeordneten Lüftungseinrichtungen bedingt durch die niedrige Bauhöhe der Schiebewandteile nicht angewandt werden. Ziel der Erfindung ist es, für diese Güterwagen eine geeignete, wirtschaftlich herstellbare Lüftungseinrichtung zu finden.

Erfindungsgemäß wird die Lüftungsöffnung in der Stirnwand des Eisenbahngüterwagens zwischen zwei vertikalen Stirnwandpfosten nahe dem oberen Ende der Stirnwand angeordnet, wobei mit Abstand vor der Lüftungsöffnung eine Abdeckung vorgesehen ist, die oberhalb der Lüftungsöffnung labyrinthartig in die Stirnwand eingreift. Die Lüftungsöffnung ist durch einen Schieber über ein aus Gleisebene betätigbares Gestänge verschließbar.

EP 0 172 469 A2

./...

FIG. 2

0172469

Lüftungseinrichtung für den Laderaum von
geschlossenen Eisenbahngüterwagen


Die Erfindung betrifft eine Lüftungseinrichtung für den Laderaum
von geschlossenen Eisenbahngüterwagen mit im wesentlichen aus
Schiebewandteilen bestehenden Seitenwänden, bestehend aus einem
manuell betätigbaren Schieber, der in seiner einen Endstellung
eine Lüftungsöffnung in einer Wand des Eisenbahngüterwagens verschließt und in seiner anderen Endstellung diese Öffnung freigibt.

Aus der Praxis ist es bekannt, Lüftungseinrichtungen für den
Laderaum von geschlossenen Eisenbahngüterwagen in den Seitenwänden dieser Eisenbahngüterwagen anzuordnen. Diese Lüftungseinrichtungen bestehen dabei aus einer Öffnung in der Seitenwand, vor der ein in der Regel mit Lamellen zur Verhinderung
von Wasser- und Schnee-Eintritt versehener Schieber angeordnet
ist, der manuell verschiebbar die Belüftung des Laderaumes des
Eisenbahngüterwagens ermöglicht.

Bei Eisenbahngüterwagen, deren Seitenwände im wesentlichen aus
Schiebewandteilen bestehen, ist die Anordnung einer solchen
Lüftungseinrichtung nicht möglich, da die Schiebewandteile einmal eine sehr geringe Bauhöhe aufweisen, um deren Verschieben
übereinander zu gewährleisten und zum anderen werden bei modernen
Eisenbahngüterwagen mit Schiebewänden über diese Schiebewände
Längskräfte von der Stirnwand in den Untergestellrahmen übergeleitet, so daß durch Lüftungsöffnungen eine unzulässige Schwächung der Schiebewände eintreten würde.

Die Aufgabe vorliegender Erfindung bestand nun darin, für Eisen-.
bahngüterwagen, deren Seitenwände im wesentlichen aus Schiebewandteilen bestehen, eine Lüftungseinrichtung zu finden, die den besonderen Gegebenheiten der mit Schiebewänden versehenen Eisenbahngüterwagen Rechnung trägt und eine gute Belüftung des Laderaumes gewährleistet.

Gemäß der Erfindung wird diese Aufgabe dadurch gelöst, daß die Lüftungsöffnung in der Stirnwand des Eisenbahngüterwagens zwischen zwei vertikalen Stirnwandpfosten nahe dem oberen Ende der Stirnwand angeordnet ist, daß mit Abstand vor der Lüftungsöffnung eine Abdeckung vorgesehen ist, die oberhalb der Lüftungsöffnung labyrinthartig in die Stirnwand eingreift und daß der Schieber über ein Gestänge aus Gleisebene betätigbar ist. Durch die Anordnung der Lüftungsöffnung in der Stirnwand des Eisenbahngüterwagens können die Schiebewandteile vorteilhaft von deren verbandschwächenden Öffnungen freigehalten werden. Die Bauhöhe der Schiebewandteile wird nicht nachteilig beeinflußt. Durch die mit Abstand vor der Lüftungsöffnung angeordnete Abdeckung, die oberhalb der Lüftungsöffnung labyrinthartig in die Stirnwand eingreift, wird der Eintritt von Flugschnee und Regenwasser in den Laderaum vermieden und gleichzeitig eine gute Durchlüftung des Laderaumes gewährleistet.

In einem Ausführungsbeispiel der Erfindung besteht der Schieber aus einer ebenen Platte, die an ihren Längsenden in vertikalen Führungen geführt ist und wobei das Gestänge aus nahe den Längsenden der Platte gelenkig an dieser gelagerten Schubstangen, einer unten an der Stirnwand horizontal drehbar gelagerten Welle mit festen Schwenkhebeln, die an ihren freien Enden gelenkig mit den Schubstangen verbunden sind und festen Betätigungshebeln an den Enden der Welle besteht. Diese Ausführung des Schiebers und seiner Betätigung gewährleistet eine verkantungsfreie Betätigung des Schiebers aus Gleisebene vorteilhaft von beiden Wagenlängsseiten aus.

Die Abdeckung ist zwischen den Stirnwandpfosten angeordnet, oben mit einer Abwinklung gegen die Stirnwand und dort mit einer weiteren Abwinklung nach unten versehen, wobei diese nach unten weisende Abwinklung von dem nach oben ragenden Schenkel eines L- oder U-Profils umgriffen wird, das an der Stirnwand dicht befestigt ist und dessen horizontaler Steg die obere Abdeckung der Lüftungsöffnung bildet. Die Anordnung der Abdeckung zwischen den Stirnwandpfosten und die Anordnung des L- oder U-Profils gewährleisten eine flugschnee- und regenwassersichere Abdichtung bei gleichzeitiger optimaler Belüftungsmöglichkeit durch das von diesen gebildete Labyrinth.

Einzelheiten der Erfindung werden in einem Ausführungsbeispiel anhand der Zeichnung erläutert.

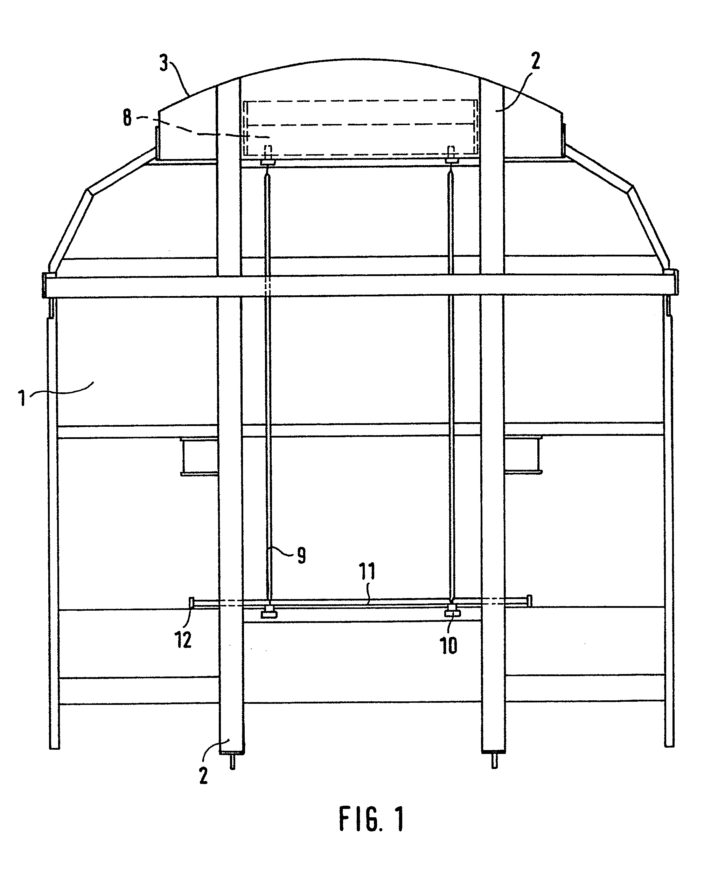

Es zeigen
Fig. 1 die Stirnansicht eines Eisenbahngüterwagen mit einer Lüftungseinrichtung gemäß der Erfindung in schematischer Darstellung,

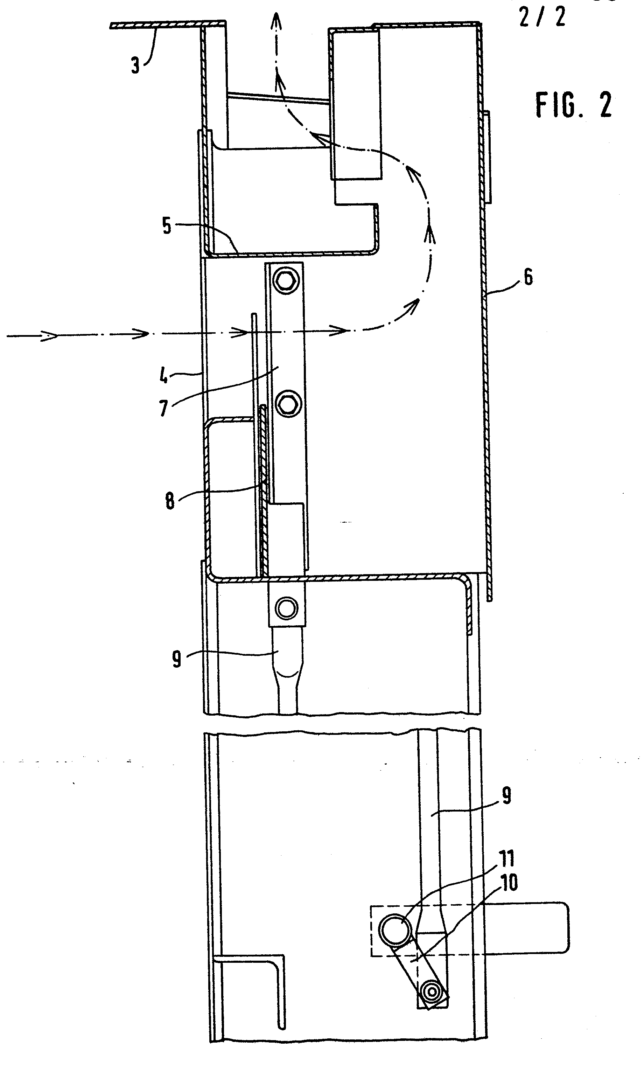

Fig. 2 einen Teilschnitt nach Linie II-II der Fig. 1, in vergrößerter Darstellung.

Von der Stirnwand 1 des Eisenbahngüterwagens sind mit Abstand zueinander zwei vertikale Stirnwandpfosten 2 beiderseits der Quermitte der Stirnwand 1 angeordnet. Oben in der Stirnwand 1 nahe dem Dach 3 ist zwischen den Stirnwandpfosten 2 eine Lüftungsöffnung 4 vorgesehen. Die Lüftungsöffnung 4 wird von einem U-förmigen Profil 5 abgedeckt, das mit seinem einen Schenkel fest mit der Stirnwand 1 verbunden ist und dessen anderer Schenkel frei vor der Stirnwand 1 nach oben ragt. Mit Abstand vor der Lüftungsöffnung 4 befindet sich eine Abdeckung 6, die an ihren Längsenden bis an die Stirnwandpfosten 2 geführt ist und die oben in Dachebene mit einer Abwinklung gegen die Stirnwand 1 versehen ist. Mit Abstand vor der Stirnwand 1 ist diese Abwinklung der Abdeckung 6 mit einer weiteren vertikal nach unten weisenden Abwinklung versehen. Diese nach unten weisende Abwinklung der Abdeckung 6 bildet mit der Stirnwand 1 und dem freien Schenkel des U-Profils 5 ein Labyrinth. Seitlich der Lüftungsöffnung 4 sind an beiden Stirnwandpfosten 2 vertikale Führungen 7 für den vertikal verschieblichen Schieber 8 angebracht. Der aus einer ebenen Platte bestehende Schieber 8 trägt nahe seinen Längsenden gelenkig Schubstangen 9, die mit ihrem anderen Ende gelenkig an festen Schwenkhebeln 10 einer horizontal quer vor der Stirnwand 1 drehbar gelagerten Welle 11 befestigt sind. An den Längsenden der Welle 11 sind Betätigungshebel 12 zur manuellen Betätigung des Schiebers 8 fest angeordnet.

Über die Betätigungshebel 12, die Welle 11, Schwenkhebel 10 und Schubstangen 9 ist der Schieber 8 vertikal verschiebbar und verschließt in seiner einen Endstellung die Lüftungsöffnung 4 und gibt in seiner anderen Endstellung die Lüftungsöffnung 4 frei. Die Abdeckung 6 bildet mit dem U-Profil 5 der Stirnwand 1 und dem Stirnwandpfosten 2 ein Labyrinth, das die Zufuhr des Luftstroms in den Laderaum bzw. aus dem Laderaum ermöglicht, jedoch das Eindringen von Flugschnee und Regenwasser in den Laderaum verhindert.

Patentansprüche

1.  Lüftungseinrichtung für den Laderaum von geschlossenen Eisenbahngüterwagen, deren Seitenwände im wesentlichen aus Schiebewandteilen bestehen, bestehend aus einem manuell betätigbaren Schieber, der in seiner einen Endstellung eine Lüftungsöffnung in einer Wand des Eisenbahngüterwagens verschließt und in seiner anderen Endstellung diese Öffnung freigibt, dadurch gekennzeichnet, daß die Lüftungsöffnung (4) in der Stirnwand (1) des Eisenbahngüterwagens zwischen zwei vertikalen Stirnwandpfosten (2) nahe dem oberen Ende der Stirnwand (1) angeordnet ist, daß mit Abstand vor der Lüftungsöffnung (4) eine Abdeckung (6) vorgesehen ist, die oberhalb der Lüftungsöffnung (4) labyrinthartig in die Stirnwand (1) eingreift und daß der Schieber (8) über ein Gestänge (9 bis 12) aus Gleisebene betätigbar ist.

2.  Lüftungseinrichtung nach Anspruch 1, dadurch gekennzeichnet, daß der Schieber (8) aus einer ebenen Platte besteht, die an ihren Längsenden in vertikalen Führungen (7) geführt ist und daß das Gestänge aus nahe den Längsenden der Platte gelenkig an dieser gelagerten Schubstange (9), einer unten an der Stirnwand (1) horizontal und drehbar gelagerten Welle (11) mit festen Schwenkhebeln (10), die an ihren freien Enden gelenkig mit den Schubstangen (9) verbunden sind und festen Betätigungshebeln (12) an den Enden der Welle besteht.

3.  Lüftungseinrichtung nach den Ansprüchen 1 und 2, dadurch gekennzeichnet, daß die Abdeckung (6) zwischen den Stirnwandpfosten (2) angeordnet ist, oben mit einer Abkantung gegen die Stirnwand (1) und dort mit einer weiteren Abkantung nach unten versehen ist, wobei diese nach unten weisende Abkantung von dem nach oben ragenden Schenkel eines L- oder U-Profils (5) umgriffen wird, daß an der Stirnwand (1) dicht befestigt ist und dessen horizontaler Steg die obere Abdeckung der Lüftungsöffnung (4) bildet.

FIG. 1

0172469
2/2

FIG. 2